# EUROPEAN PATENT SPECIFICATION

(11) **EP 4 514 737 B1**
(45) Date of publication and mention of the grant of the patent: **05.11.2025**
(21) Application number: 24745343.4
(22) Date of filing: 23.05.2024
(51) Int. Cl.: B66F 7/06, B66F 3/46

(54) **JACK**
JACK
CRIC

(30) Priority: 29.05.2023 CZ 20230218
(43) Date of publication of application: 05.03.2025
(73) Proprietor: Autolift Production s.r.o., 60200 Brno, Zabrdovice (CZ)
(72) Inventor: MUTKOVIC, Jan, 74221 Koprivnice (CZ)
(74) Representative: Tomickova, Dana
(86) International application number: PCT/CZ2024/050036
(87) International publication number: WO 2024/245474

(56) References cited:
- CN-A- 111 891 968
- FR-A- 707 359
- FR-A1- 2 674 415
- US-A- 2 147 837
- US-A- 5 050 844
- US-A1- 2021 139 096

## Description

### Technical Field

The present invention relates to jacks, in particular for automobiles, for making the chassis accessible for servicing.

### Background of the Invention

Various lifting devices for automobiles are known in the current state of the art. For example, hydraulic or mechanical hoists designed for lifting to lower heights are known, e.g. for changing a wheel. Larger jacks are also known, designed e.g. for car repair shops, which allow the entire automobile to be lifted and to a greater height. An example of such a device is described in the document US5156238 A. This jack comprises a foundation and a bearing part that are connected together by a parallelogram and a hydraulic linear drive. A further jack according with preamble of claim 1 is disclosed by document US2147837A.

However, the structure of the well-known smaller jacks is often very complex and not robust enough. In addition, hydraulic drives can be susceptible to damage and are dependent on liquid or energy supply. It would therefore be suitable to come up with a jack solution that would provide a more robust structure and more user-friendly use.

### Summary of the Invention

The shortcomings of the solutions known from the state of the art are to a certain extent eliminated by a jack according to claim 1, the jack comprises a total of two lifting sections, wherein each section comprises an upper platform and a lower platform, which are mutually connected by two pairs of arms. Each arm is rotationally connected to the upper platform at the upper end and rotationally connected to the lower platform at the lower end. Further, each lifting section comprises a strut that is slidingly connected to the lower platform at the lower end and rotationally connected to the upper platform at the upper end, such that by sliding the lower end of the strut, the strut can be tilted or erected, thereby adjusting the vertical distance of the platforms, while the arms hold the platforms stable and/or parallel to each other. Further, each lifting section comprises a linear drive for sliding the lower end of the strut, wherein the drive is connected to the lower platform and to the strut, wherein the direction of the sliding of the lower end of the strut is parallel to the longitudinal axis of the lifting section and to the lower platform.

The linear drive can therefore have two main parts that can slide relative to each other in one axis, wherein one of these parts is connected to the lower platform and the other part is connected to the strut, in particular to the lower end thereof. The sliding connection of the lower end of the strut to the lower platform can be provided directly by the linear drive or by another sliding element, e.g. a rail. The arms in each pair can preferably have confluent axes of rotation. The lifting section can then be symmetrical with respect to a plane perpendicular to both platforms and parallel to the longitudinal (i.e. longer) dimension of the lifting section.

Both platforms can have the same or similar shape, e.g. they can have a rectangular plan and the same width. The platforms, arms, and struts can be steel, for example. For example, the arms and the strut can have round or square cross-sections. The upper platform can be provided with removably attachable cushioning pads, e.g. rubber ones. The lower platform is designed for contact with the substrate, the upper platform is designed for contact with the lifted object. The tilting of the strut due to the sliding of its lower end then lifts the upper platform and thus the lifted object. The lower platform can thus comprise a substantially planar lower area for contact with the ground, wherein other parts, in particular the arms, strut, and linear drive, are then attached to it from above or from the side. The upper platform comprises a substantially planar upper area for supporting the lifted object, and other components, particularly the arms and the strut, are attached to it from below or from the side. The upper platform can also include an extension element that is removably connectable to one of its ends, making it possible to extend the upper platform and e.g. lift larger vehicles without preventing the lifting of smaller objects.

Therefore, the jack can be adjusted by the movement of the drive to two basic positions - a folded one, in which the platforms are maximally close to each other, and an unfolded one, where the platforms are maximally distant. In the folded position, the angle between the lower platform and the arms and strut is smaller than in the unfolded position. For example, in the folded position, the strut can rest directly on the lower platform. The upper platform can also slide in the longitudinal direction during lifting. In addition to these extreme positions, the jack can be adjustable to partially unfolded positions. It may be possible to adjust the jack in any position between the folded and unfolded positions, or the positions can be spaced apart, for example determined by the positions in which the jack can be secured against spontaneous folding, as will be described below with reference to the lock.

The linear drive is preferably mechanical. Mechanical drives can be cheaper or structurally simpler than e.g. pneumatic or hydraulic ones and may be less prone to failure. The placement of the drive directly on the lower platform, e.g. instead of in the strut, increases the stability of the jack and can simplify the structure of the jack. A part of the linear drive can then be permanently static, so that e.g. the energy or torque supply to the linear drive is simplified. It is also easier to cover the linear drive in this way to protect it from damage or dirt and reduce the risk of injury from moving parts thereof.

When viewed from the side, both pairs of arms on each lifting section can form a parallelogram with the upper platform and lower platform. This ensures that the platforms are parallel in all positions, that the stability of the jack can be increased, etc.

The linear drive of each lifting section preferably comprises a threaded rod rotationally attached to the lower platform and comprises an element with a complementary internal thread attached to the strut. In principle, these elements can be also interchanged and thus the element with the external thread can be rotationally connected to the strut and sliding relative to the lower platform to which the element with the internal thread is non-slidingly attached.

The drive with the helix is relatively structurally simple and reliable at the same time. In addition, it is not dependent on e.g. hydraulic liquid or compressed air supply, etc. The torque source can be part of the jack but is preferably external. For example, the threaded rod can be connected, directly or via a gearbox, to a shaft with an end piece for attachment to a standard drill or screw tightening machine. Since the drill is a common part of workshops, whether electrically, battery, pneumatically driven, etc., it can be independent of the power source, is easily portable and operable, etc. Moreover, the jack can then be manufactured more cheaply because the torque source does not have to be a fixed part thereof.

On each lifting section, the lower platform can comprise a rail to define the sliding of the lower end of the strut, wherein the strut is provided with at least one strut wheel movably mounted on the rail. The strut can be also connected to the strut in a gliding manner. The wheel can move inside or on the rail. A single rail or e.g. a pair of rails arranged symmetrically with respect to the longitudinal axis of the jack can be used. In general, any sliding element can be used instead of rails, but rails are relatively cheap and reliable and can provide smooth sliding with minimal resistance.

On each lifting section, both the upper platform and lower platforms can be made of sheet metal, wherein their cross-section for most of their length comprises a base and two lateral sides fixed to the base at both ends thereof. Sheet metal platforms without lateral walls can also be used, but these walls are suitable in terms of better handling of the jack, since the sides of the platforms are not sharp, and in addition, these lateral sides allow the assembly of other components of the lifting section. For example, openings for hinges that implement rotational connections of arms or strut can pass through them. At the same time, the sheet metal platforms provide a robust and stable structure with a large contact area with the ground / lifted object. At the same time, the platforms are relatively thin and define an internal space surrounding all the other parts in the folded state of the jack, such that the resulting jack is compact and the components are protected from damage or dirt.

On each lifting section, the upper platform can comprise castor wheels on its lower side for handling or positioning the jack. The lower platform can then comprise openings for the wheel to pass through. However, it is also possible to e.g. place the wheels on the sides so that they extend beyond the lower platform in the lateral direction and do not have to pass through it. However, it is more preferable to use openings in the lower platform. When the jack is moved into the folded state, the platforms are brought so close that the wheels at least partially pass through the appropriately placed and/or large openings through the lower platform. The lower platform is thus lifted off the ground and the entire folded jack is mobile, which makes handling considerably easier. There is no need to provide locks or brakes for the castor wheels, as they are automatically lifted off the ground when the jack is used.

On each lifting section, the jack can include a lock to prevent the lower end of the strut from sliding spontaneously. As a result, the unfolded position of the jack is not secured only by the drive, increasing the safety and reducing the risk of injury or damage to the linear drive. The lock can be implemented e.g. as a row of teeth located on the lower platform, where this row can lead in the longitudinal direction of the jack, and a stop for catching between the teeth, wherein the stop is connected to the strut by a rotational connection. The teeth are then oriented or shaped such that the stop in contact with the teeth prevents the lower end of the strut from sliding, at least in the direction corresponding to the folding of the jack. The stop can be held in contact with the teeth only by gravity, e.g. it is not necessary to use a spring to push the stop down, although this is possible. In order to fold the jack, it may then be necessary to manually remove the stop from the contact with the teeth before engaging the drive. At the same time, the shape of the teeth can be such that when the jack is unfolded, the stop passes spontaneously through the teeth, i.e. the Icck does not prevent unfolding in any way, but automatically always prevents the jack from folding until it is manually removed.

The jack comprises a total of two lifting sections, the lower platforms of which are connected at both ends by cross members, wherein one of the cross members comprises a shaft for transmitting torque between the lifting sections. The shaft is connected to the linear drives of both lifting sections by a gearbox. Two lifting sections allow the jack to be easily used e.g. for lifting two-track vehicles. The connection of the sections by the cross members, e.g. tubes, makes it possible to ensure the alignment of the lifting sections. One of the tubes can then also protect the torque-transmitting shaft and thanks to the common shaft, both sections are adjusted always to the same position. The cross members are preferably connected to the sections removably such that the jack can be easily unfolded into individual sections if necessary.

The shaft is then connected to one of the linear drives at each end thereof by a gear, wherein the linear drive of at least one lifting section is provided with an end piece for attachment to the drill. Thus, the drill can be used to supply torque to one of the linear drives - in particular to its gearbox, and the shaft connecting both lifting sections then transmits the torque to the second linear drive on the second lifting section.

The jack can further comprise a ramp for a single-track vehicle removably attachable to one end of the lifting section, wherein the jack can further comprise a bracket for a wheel of the single-track vehicle removably attachable to the other end of the lifting section.

The jack can then in principle form, with these additional components, an assembly for lifting single-track vehicles, which comprises a jack, in an example not part of the claimed invention comprising a single lifting section, and further comprising a ramp and a bracket for a wheel that can be fixed to the jack.

The ramp can take the form of a metal block with an inclined side, the height of which corresponds to the height of the folded jack. It can be fixed to the upper section or the lower section. For example, it can be screwed to the lower section under the extension element of the upper section. Said inclined side then gradually lowers the height of the ramp such that at the end offset from the jack it touches the ground (in the folded or almost folded position of the jack) and it is thus easy to drive e.g. a motorbike onto the jack.

The bracket for the wheel can take the form of a sheet metal piece that is approximately "C"-shaped when viewed from the side and that also has an approximately C-shaped cross-section. Thus, it is approximately a torus part open such that a wheel can be driven in it or a motorcycle wheel can be inserted in it. It thus defines a recess into which it is possible to place, e.g. the front wheel of a motorbike. This recess then surrounds the wheel partially from the front, back and both lateral sides. In principle, this bracket is a motorcycle stand. In addition, this bracket can comprise e.g. openings for straps for securing the motorcycle fork, or it can comprise such straps, or can comprise metal arms for attaching the motorcycle fork, etc.

Such equipped jack can then be conveniently used for lifting motorcycles, or electric bikes or other single-track vehicles.

An alternative for additional part of the jack or lifting assembly that here comprises the jack with two lifting sections can be a pair of shorter cross members. While the cross members mentioned above correspond in length mainly to the width of the automobile, these additional shorter cross members correspond e.g. to the width of a four-wheeler. Both lifting sections can then comprise the ramp described above. The resulting jack can then be conveniently used for lifting quad bikes.

In general, it is then possible to e.g. create a complex lifting assembly that comprises the jack with two lifting sections as described above. It further comprises two pairs of cross members - one for automobiles, one for quad bikes. It further comprises two ramps - one for each section, and can further comprise at least one bracket for a wheel of a single-track vehicle. The resulting assembly thus allows one to easily change the form of the jack, depending on whether a motorcycle, an automobile, a quad bike, etc. is to be lifted.

### Description of Drawings

A summary of the invention is further clarified using exemplary embodiments thereof, which are described with reference to the accompanying drawings, in which:
- fig. 1: schematically shows a perspective view of an embodiment of the jack of the invention that includes one lifting section, wherein this jack is in a partially unfolded position where the upper platform is slightly lifted above the lower platform by a quadruplet of arms and a strut;
- fig. 2: schematically shows a side view of the jack of fig. 1, wherein the arrangement of the arms with the platforms in a parallelogram can be seen and the placement of the castor wheels on the lower side of the upper platform can be seen;
- fig. 3: schematically shows a view from above of the jack of fig. 1;
- fig. 4: schematically shows a view in the A-A section indicated in fig. 2, wherein the plane of the section is vertical, perpendicular to the longitudinal direction of the jack and intersects the rotational connection of one of the pairs of arms with the lower platform, wherein in the figure the mounting of the threaded rod implementing the linear drive for sliding the lower end of the strut along the lower platform can be seen;
- fig. 5: schematically indicates a cross-section of the upper platform and the lower platform, where each of these cross-sections includes a foundation, two lateral sides and two additional walls for securing pins to implement the rotational connections of the arms to the platform;
- fig. 6: schematically shows a view in the B-B section indicated in fig. 2, wherein the plane of the section is vertical, perpendicular to the longitudinal direction of the jack and intersects the strut wheels mounted in rails on the lower platform;
- fig. 7: shows a detailed view of the strut wheels and their mounting from fig. 6;
- fig. 8: schematically shows a perspective view of another embodiment of the jack, in which the jack comprises a pair of lifting sections, each implemented as the jack of the embodiment of fig. 1, wherein the placement of the shaft for transmitting torque between the drives of both lifting sections is indicated; and
- fig. 9: schematically indicates the operation of an exemplary lock for securing the jack against spontaneous folding.

### Exemplary Embodiments of the Invention

The invention will be further clarified using exemplary embodiments with reference to the respective drawings.

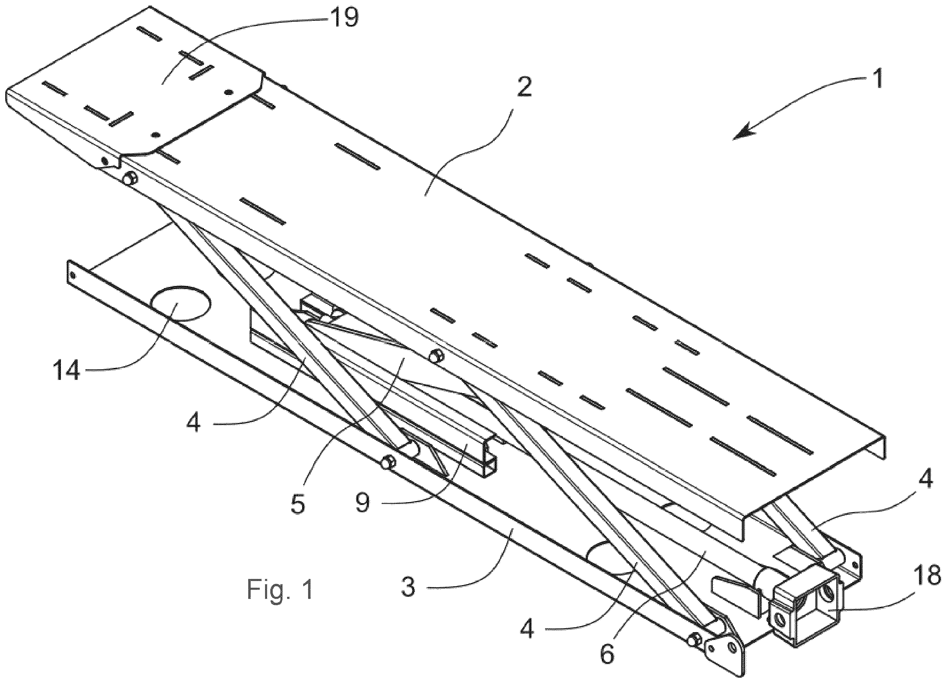

An exemplary embodiment of the invention is shown in figs. 1-7. The jack here comprises one lifting section 1, and can thus be used e.g. for lifting single-track vehicles. However, it is also possible to use this jack in areas other than vehicle servicing. The lifting section 1 comprises a lower platform 3 and an upper platform 2 - the lower platform 3 serves as a foundation and its lower area is in contact with the ground during the use of the jack, while the upper platform 2 serves as a support area for the lifted object. The platforms are connected to each other by two pairs of arms 4 and a strut 5. The lifting is implemented by erecting the strut 5, which is rotationally connected to the upper platform 2, while it is connected to the lower platform 3 by a sliding connection. The sliding of the lower end of the strut 5 is provided by a linear drive 6 that is mounted on the lower platform 3 and pulls or pushes the lower end of the strut 5 in the longitudinal direction of the jack, whereby the strut 5 is moved towards the vertical position, thereby increasing the distance between the platforms.

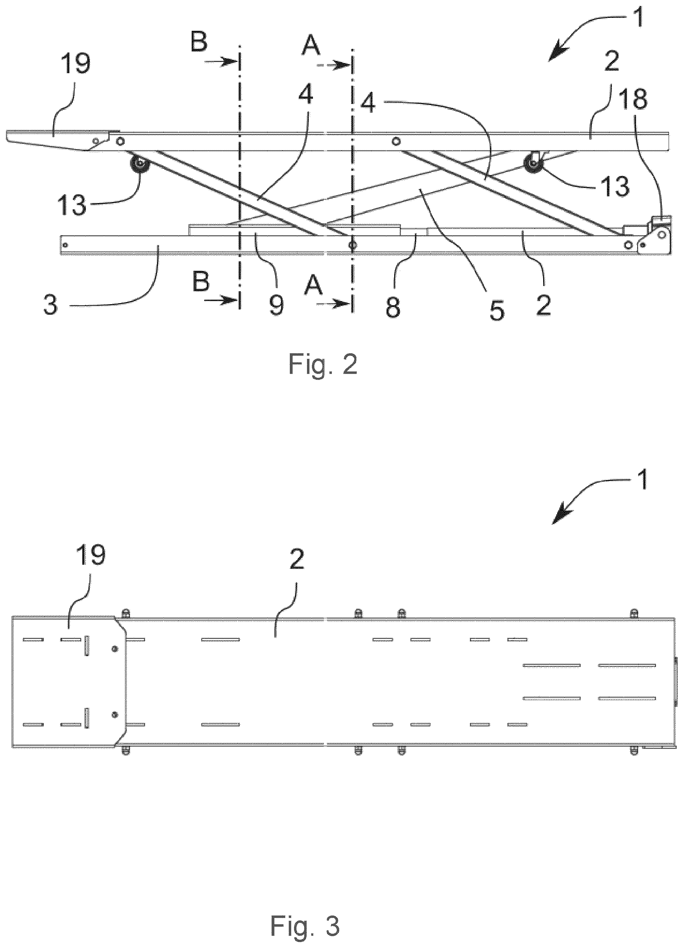

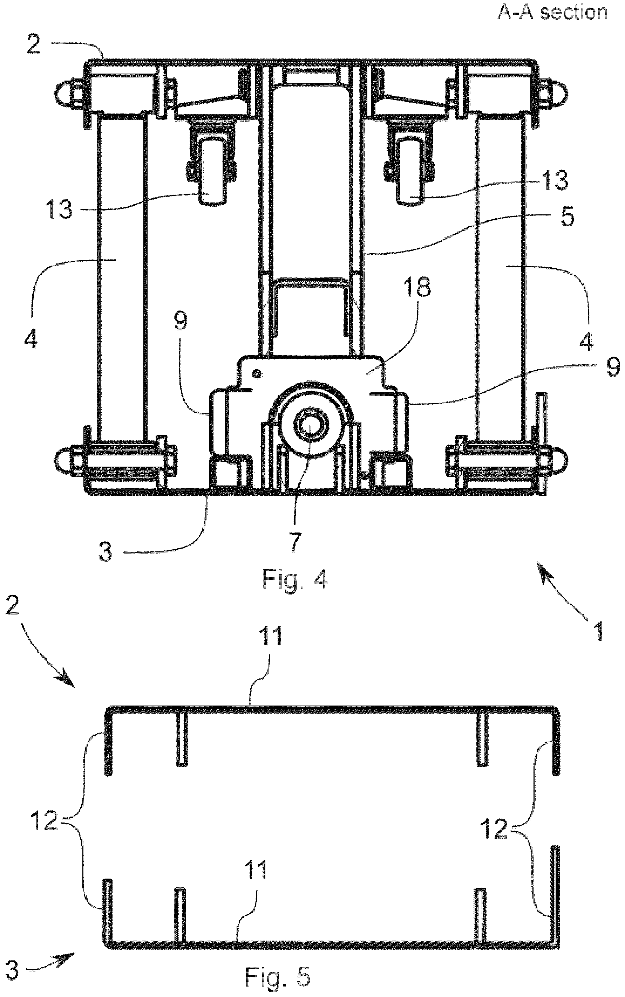

The upper platform 2 is in the shown embodiment formed from a metal sheet metal with a cross-section that is constant over most of the length of the platform and is approximately "U"-shaped, i.e. has a base 11 and two perpendicular lateral sides 11 on its sides. This cross-section is indicated in fig. 5. The base 11 is used for attaching the strut 5, the castor wheels 13, and the arms 4. In the shown embodiment, the arms 4 are attached by means of pins in spacing and also gliding bushes, where each pin is secured in the lateral side 11 and an additional wall extending along said lateral side 11 for at least part of the length of the upper platform 2. The castor wheels 13 and the strut 5 are rotationally attached using analogous walls. Alternatively, instead of these sheet metal brackets - additional walls, any otherwise implemented brackets, such as metal lugs, can be used. The arms 4 of each pair have a common axis of rotation, i.e. they are confluent when viewed from the side (fig. 2). At the same time, all arms 4 are parallel, as are both platforms - the parallelism of the platforms is ensured by the arrangement of the arms 4. Both pairs of arms 4 with both platforms have the form of a parallelogram, as can be seen, for example, in fig. 2, wherein the strut 5 in this embodiment crosses the arms 4.

An extension element 19 is an optional part of the upper platform 2, which can be used to adjust the length of the lifting section 1 for use with vehicles of different sizes. The length of both platforms can be, for example, 1400-1700 mm, e.g. 1550 mm, and this length is extended by, for example, 100-300 mm, e.g. 200 mm, by the extension element 19 removably fixable, e.g. by screws, to one end of the upper platform 2. The width of the platforms can be, for example, 150-500 mm, e.g. 300-400 mm. The height of the jack in the folded position can be, for example, 80-150 mm, in the unfolded position e.g. 550-800 mm.

Another optional part of the upper platform 2 is one or more elastic pads. These pads can, for example, be removably attached into openings provided in the upper platform 2. They can be made of, for example, rubber. For example, the thickness of the pad can be 2-4 cm. Two pads can be provided - one for each end of the upper platform 2. The pads can protect the jack and the lifted object from damage or prevent the object from sliding on the jack.

The lower platform 3 is implemented similarly to the upper platform 2. It is therefore formed from a metal sheet metal with a cross-section that is constant over most of the length of the platform and is approximately "U"-shaped, i.e. it has a base 11 and two perpendicular lateral sides 11 on its sides. The base 11 is used for fixing the strut 5, the linear drive 6, and the arms 4. In the shown embodiment, the arms 4 are attached by means of pins, where each pin is secured in the lateral side 11 and the additional wall extending along said lateral side 11 for at least part of the length of the upper platform 2. Here, too, any otherwise implemented brackets, such as metal lugs, can be used instead of these additional walls.

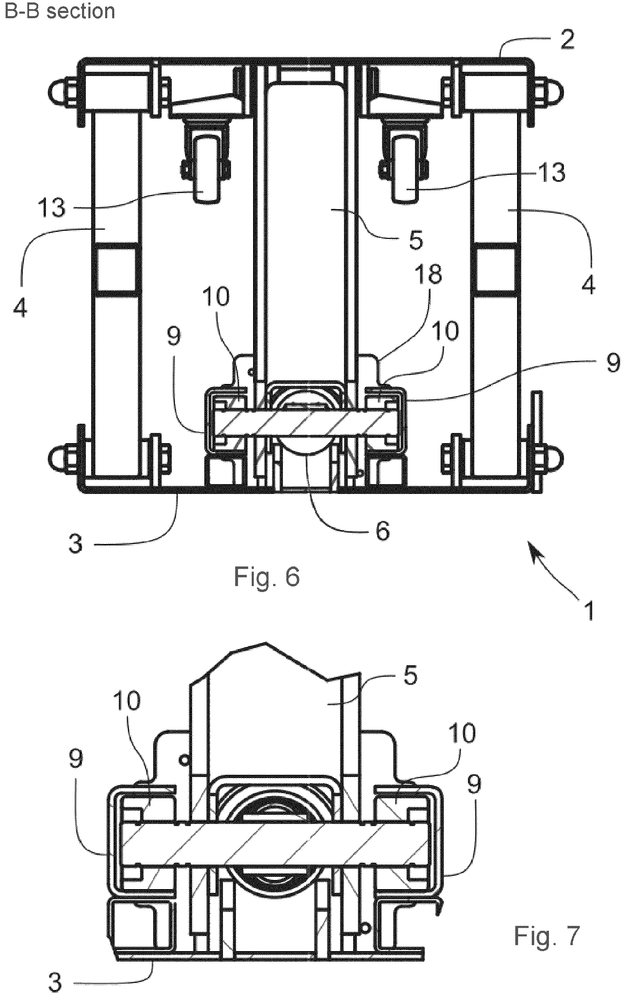

As can be seen in figs. 4 and 6, a pair of rails 9 for the strut 5 wheels 10 is attached to the lower platform 3. These rails 9 have a "C"-shaped cross-section, i.e. the shape of three sides of a rectangle, with the open sides facing inwards, and one strut 5 wheel 10 is mounted in each of them. These strut 5 wheels 10 have a common axis of rotation (see fig. 6) that rotationally connects them to the lower end of the strut 5, which is thereby slidingly secured to the lower platform. Since the strut 5 is rotationally attached at the upper end, the distance of the platforms and therefore the inclination of the arms 4 is adjusted by sliding of the lower end. In the shown embodiment, the strut 5 leads in the direction opposite to the arms 4, so that it intersects them when viewed from the side. The lifting is thus provided by sliding the lower end of the strut 5 by means of the linear drive 6, as will be described in more detail below, while the arms 4 arranged in a parallelogram on both sides of the jack provide stability and hold the upper platform 2 horizontal or parallel to the lower platform 3.

The lower platform 3 further includes four openings 14 for the wheel to pass through. In the shown embodiment, these are round, but generally they can also be for example rectangular. The placement of these openings is chosen such that one of the castor wheels 13 passes through each of them when the jack is fully folded - the lifting mechanism is thus designed in such a way that when the jack is folded, the lower platform 3 is eventually slightly lifted as a result of the platforms being pulled close together so that the castor wheels 13 extend in a downward direction beyond the lower platform 3 - protruding from it through the openings 14 for the wheel to pass through. In this position, the castor wheels 13 can thus be in contact with the ground and facilitate the handling of the jack. Since the upper platform 2 slides in the longitudinal direction when being lifted, which is caused by the parallelogram connection of the platforms, the openings 14 for the wheel to pass through in the unfolded state of the jack are not located directly under the castor wheels 13. In general, these openings have approximately the same distance from the points of attachment of the arms 4 to the lower platform 3 as the castor wheels 13.

The linear drive 6 is implemented in the shown embodiment by means of a rotational threaded rod 7 - a trapezoidal screw. The threaded rod 7 is rotationally mounted on the lower platform 3 in a protective tube, wherein its rear end is at the rear end of the jack where it passes into the gearbox 18, and the front end is located approximately halfway along the length of the jack. The lower end of strut 5, which is slidingly and also rotationally attached to the lower platform 3, is provided with an element 8 with a complementary internal thread, i.e. a nut. In relation to this nut, the strut 5 is non-sliding but it is rotational such that when the strut is inclined the nut remains 5 horizontal. The nut is fitted on the threaded rod 7 such that the rotation of the threaded rod 7 results in the nut sliding along the length of the lower platform 3, thereby sliding the lower end of the strut 5 and thus adjusting the distance of the platforms. In principle, the nut is thus sliding in the rails 9 on the lower platform 3 and pulls or pushes the strut 5. There can be only one strut 5 wheel 10 on each side, i.e. in each rail 9, but it is also possible to use more of them for higher stability. The rails 9 are in the shown embodiment (fig. 6) offset from the area of the lower platform 3, however, in other embodiments, they can also be directly seated on the platform. In other embodiments, these wheels can be replaced e.g. by gliding sliding elements.

The gearbox 18, which is used to supply torque to the threaded rod 7, can be provided with a drive or rotational shaft 17 for supplying torque from a separate drive. The jack can be provided e.g. with an electric motor. Preferably, however, the gearbox 18 is provided with the shaft 17 having an end piece for inserting into a drill, e.g. a standard cordless drill, preferably with a power of at least 1000 W. The gear ratio of the gearbox 18 can be substantially arbitrary, in some embodiments e.g. 1:1, preferably e.g. at least 1:2 or at least 1:3, such that the threaded rod 7 rotates more slowly than the drive and thus limits the stress on the drive. In the attached drawings, the gearbox 18 is indicated only schematically, it can be implemented, for example, by a pair of toothings with mutually perpendicular axes of rotation.

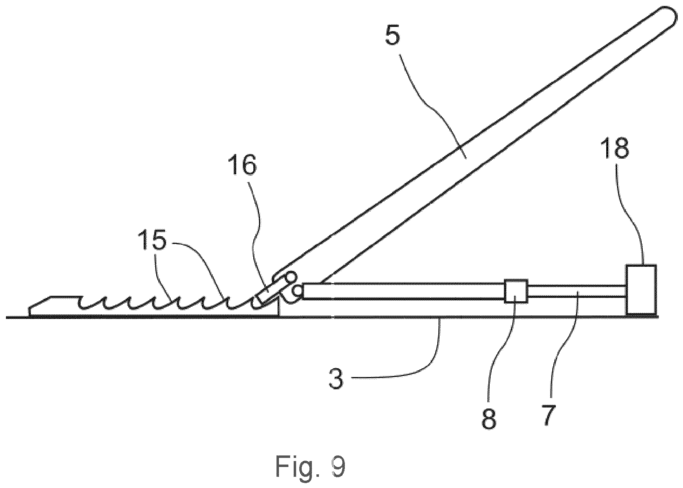

The drive ensures the unfolding and folding of the jack. However, it is suitable to additionally secure the upper platform 2 against spontaneous downward movement, or to secure the strut 5 against spontaneous movement, to ensure safety, such that the unfolded (i.e. lifted) position of the jack is not secured only by the drive or by the thread of the threaded rod 7. The lifting section 1 thus includes a lock that can prevent the spontaneous movement of the strut 5. In the shown embodiment (see fig. 9), the lock comprises a row of inclined teeth 15 arranged along the length of the jack on the lower platform 3, and a stop 16 for fitting between these teeth 15. The inclination of the teeth 15 is such that the movement of the stop 16 in the horizontal direction corresponding to the tilting of the strut 5, i.e. the downward movement of the upper platform 2, is prevented. The stop 16 is hinged so that it can be manually rotated out of contact with the teeth 15, thereby allowing the jack to be folded. In the lower position, where the stop 16 fits between the teeth 15, the stop 16 in the shown embodiment can be held only by its own weight. In fig. 9, only a part of the lower platform 3, the strut 5, and the parts of the linear drive 6 with the lock are shown for illustration.

Thus, briefly, the lifting mechanism of the jack includes a sliding element which is slidingly mounted in the rails 9 on the lower platform 3. In fig. 9, this element takes the form of a rod into which the threaded rod 7 can enter and which has a rotational connection to the strut 5 at one end and an element 8 with a complementary internal thread at the other end. Thus, a nut fitted on the threaded rod 7 introduced into the gearbox 18 is mounted on this element. Further, the stop 16 is rotationally mounted on this element or directly on the strut 5, the counterpart of which is a row of teeth 15 on the lower platform 3. Further, the element is rotationally connected to the lower end of the strut 5 rotationally connected to the upper platform 2. As a result of this arrangement, the strut 5 is inclined by rotation of the threaded rod 7, thereby adjusting the height of the upper platform 2. The lock can be provided with a visual indication of the locking to reduce the risk of the operator turning on the drive to fold the jack while the lock is locked, which could result in damage to the linear drive 6, the torque source, or the lock. In alternative embodiments, it is possible to use e.g. any type of linear drive other than a helix, e.g. also hydraulic or pneumatic, it is possible to use any type of sliding connection other than rails with wheels, it is possible to implement the lock differently or to place it on a different part of the lifting section, it is possible to shape the platforms differently, to arrange the arms differently, etc.

In alternative embodiments, the lifting section 1can comprise e.g. three pairs of arms 4. Similarly, it can comprise more than one strut 5, e.g. it can comprise a pair of struts 5 placed side by side and together connected to the linear drive 6. The cross-sections of the arms 4 and of the strut 5 are square or rectangular in the shown embodiments, but in general they can have any shape. Their thickness, as well as the thickness of the platforms, is chosen mainly with regard to the required lifting capacity of the jack.

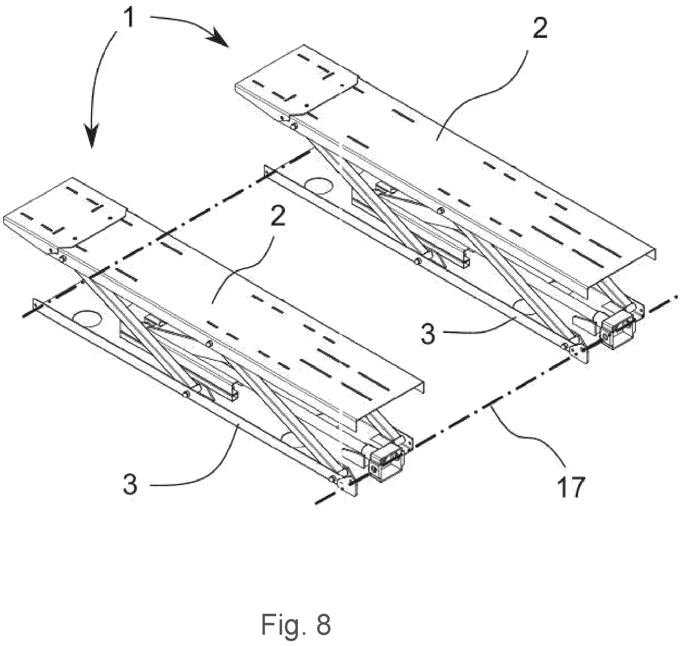

In another exemplary embodiment, which is indicated in fig. 8, the jack includes a pair of lifting sections 1. Each of these sections can be implemented as described above and shown in figs. 1 to 6. Such a jack can then be used to lift e.g. automobiles. To ensure alignment of both upper platforms 2, the linear drives 6 of the lifting sections 1 are connected by a shaft 17 between their gearboxes 18. The position of this shaft 17 is indicated by the dash-dot line in fig. 8. The shaft 17 is preferably mounted in a protective tube. In the shown embodiment, each end of this shaft 17 is provided with an end piece for attachment to the linear drive 6, in particular to the gearbox 18. The shaft thus transmits the torque between the gearboxes 18. One of the linear drives 6 is then rotated on its gearbox 18 by an external torque source, and from it the torque is transmitted to the threaded rods 7 of both lifting sectiors 1, the folding and unfolding of which then proceeds as described above. The torque is transmitted to one rod directly by this gearbox 18, and it is transmitted to the other rod by the shaft 17. At the rear end of the jack (opposite the gearboxes 18), both lifting sections 1 are also connected by a rod, which is also only indicated by a dash-dot line in fig. 8, to ensure that the longitudinal directions of both lifting sections 1 are aligned. Both connecting rods (the rear one without the shaft 17 and the front one with the shaft 17) are preferably removable so that the lifting sections 1 can be handled, even separately if necessary, as easily as possible.

In some embodiments, the jack can further comprise a ramp with an inclined plane that can be fixed to one end of the lifting section 1. The ramp then forms an inclined end of the section approaching the ground, so that in the folded, or almost folded state of the jack, a motorcycle can be easily driven onto the section. For example, the ramp can be so high that it contacts the ground during the folding of the jack before the castor wheels 13 are extended. The lifting section 1 is then stable with respect to the ground when the ramp is being driven onto. The jack can further include a bracket for a wheel of a single-track vehicle that can be fixed to the other end of this section, such that after the motorcycle has been driven thereon, the motorcycle can also be stably attached on the upper platform 2 and lifted by the jack.

### List of reference signs

- 1 -: Lifting section
- 2 -: Upper platform
- 3 -: Lower platform
- 4 -: Arm
- 5 -: Strut
- 6 -: Linear drive
- 7 -: Threaded rod
- 8 -: Element with a complementary internal thread
- 9 -: Rail
- 10 -: Strut wheel
- 11 -: Base
- 12 -: Lateral side
- 13 -: Castor wheel
- 14 -: Opening for the wheel to pass through
- 15 -: Tooth
- 16 -: Stop
- 17 -: Shaft
- 18 -: Gearbox
- 19 -: Extension element

## Claims

1. A jack comprising at least one lifting section (1) comprising an upper platform (2) and a lower platform (3) that are mutually connected by two pairs of arms (4), wherein each arm (4) is rotationally and non-slidingly connected to the upper platform (2) at the arm's (4) upper end and rotationally and non-slidingly connected to the lower platform (3) at the arm's (4) lower end, wherein each lifting section (1) further comprises a strut (5) that is slidingly connected to the lower platform (3) at lower end and rotationally connected to the upper platform (2) at upper end, wherein each lifting section (1) further comprises a linear drive (6) to slide the lower end of the strut (5), wherein the drive is connected to the lower platform (3) and to the strut (5), wherein the direction of sliding of the lower end of the strut (5) is parallel to longitudinal axis of the lifting section (1) and to the lower platform (3), wherein, when viewed from the side, both pairs of arms (4) on each lifting section (1) form a parallelogram with the upper platform (2) and the lower platform (3), **characterized in that** the jack comprises a total of two of said lifting sections (1), the lower platforms (3) of which are connected at both ends by cross members, wherein one of the cross members comprises a shaft (17) for transmitting torque between the lifting sections (1), which is connected by a gearbox (18) to the linear drives (6) of both lifting sections (1), wherein the shaft (17) is connected at each end thereof by a gear to one of the linear drives (6), wherein the linear drive (6) of at least one lifting section (1) is provided with an end piece for attachment to a drill.

2. The jack according to claim 1, **characterized in that** the linear drive (6) of each lifting section (1) comprises a threaded rod (7) rotationally attached to the lower platform (3) and comprises an element (8) with a complementary internal thread attached to the strut (5).

3. The jack according to any one of the preceding claims, **characterized in that** on each lifting section (1) the lower platform (3) comprises a rail (9) to define the sliding of the lower end of the strut (5), wherein the strut (5) is provided with at least one strut (5) wheel (10) movably mounted on the rail (9).

4. The jack according to any one of the preceding claims, **characterized in that** on each lifting section (1) the upper platform (2) and lower platform (3) are made of sheet metal, wherein their cross-section for most of their length comprises a base (11) and two lateral sides (12) fixed to the base (11) at both ends of the base (11).

5. The jack according to any one of the preceding claims, **characterized in that** on each lifting section (1) the upper platform (2) comprises castor wheels (13) on its lower side and the lower platform (3) comprises openings (14) for a wheel to pass through.

6. The jack according to any one of the preceding claims, **characterized in that** on each lifting section (1), the jack comprises a lock to prevent the lower end of the strut (5) from sliding spontaneously.

7. The jack according to claim 6, **characterized in that** the lock comprises a row of teeth (15) located on the lower platform (3) and a stop (16) for catching between the teeth (15), wherein the stop (16) is connected to the strut (5) by a rotational connection.

8. The jack according to any one of the preceding claims, **characterized in that** it further comprises a ramp for a single-track vehicle removably attachable to one end of the lifting section (1), wherein the jack further comprises a bracket for a wheel of the single-track vehicle removably attachable to the other end of this lifting section (1).

## Patentansprüche

1. Ein Wagenheber umfassend mindestens einen Hebeabschnitt (1) umfassend eine obere Plattform (2) und eine untere Plattform (3), die durch zwei Paare von Armen (4) miteinander verbunden sind, wobei jeder Arm (4) drehbar und nicht gleitend mit der oberen Plattform (2) am oberen Ende des Arms (4) verbunden ist und drehbar und nicht gleitend mit der unteren Plattform (3) am unteren Ende des Arms (4) verbunden ist, wobei jeder Hebeabschnitt (1) ferner eine Strebe (5) umfasst, die mit der unteren Plattform (3) am unteren Ende gleitend verbunden ist und mit der oberen Plattform (2) am oberen Ende drehbar verbunden ist, wobei jeder Hebeabschnitt (1) ferner einen Linearantrieb (6) zum Gleiten des unteren Endes der Strebe (5) umfasst, wobei der Antrieb mit der unteren Plattform (3) und mit der Strebe (5) verbunden ist, wobei die Gleitrichtung des unteren Endes der Strebe (5) parallel zur Längsachse des Hebeabschnitts (1) und zur unteren Plattform (3) ist, wobei, von der Seite betrachtet, beide Paare von Armen (4) an jedem Hebeabschnitt (1) ein Parallelogramm mit der oberen Plattform (2) und der unteren Plattform (3) bilden, **dadurch gekennzeichnet, dass** der Wagenheber insgesamt zwei der Hebeabschnitte (1) umfasst, deren untere Plattformen (3) an beiden Enden durch Querträger verbunden sind, wobei einer der Querträger eine Welle (17) zum Übertragen eines Drehmoments zwischen den Hebeabschnitten (1) umfasst, die über ein Getriebe (18) mit den Linearantrieben (6) beider Hebeabschnitte (1) verbunden ist, wobei die Welle (17) an jedem Ende davon durch ein Zahnrad mit einem der Linearantriebe (6) verbunden ist, wobei der Linearantrieb (6) mindestens eines Hebeabschnitts (1) mit einem Endstück zur Befestigung an einem Bohrer versehen ist.

2. Der Wagenheber nach Anspruch 1, **dadurch gekennzeichnet, dass** der Linearantrieb (6) jedes Hebeabschnitts (1) eine Gewindestange (7) umfasst, die drehbar an der unteren Plattform (3) befestigt ist, und ein Element (8) mit einem komplementären Innengewinde umfasst, das an der Strebe (5) befestigt ist.

3. Der Wagenheber nach einem der vorhergehenden Ansprüche, **dadurch gekennzeichnet, dass** an jedem Hebeabschnitt (1), die untere Plattform (3) eine Schiene (9) umfasst, um das Gleiten des unteren Endes der Strebe (5) zu definieren, wobei die Strebe (5) mit mindestens einem Rad (10) der Strebe (5) versehen ist, das beweglich an der Schiene (9) angebracht ist.

4. Der Wagenheber nach einem der vorhergehenden Ansprüche, **dadurch gekennzeichnet, dass** an jedem Hebeabschnitt (1), die obere Plattform (2) und die untere Plattform (3) aus Blech hergestellt sind, wobei ihr Querschnitt für den größten Teil ihrer Länge eine Basis (11) und zwei seitliche Seiten (12) umfasst, die an beiden Enden der Basis (11) an der Basis (11) angebracht sind.

5. Der Wagenheber nach einem der vorhergehenden Ansprüche, **dadurch gekennzeichnet, dass** an jedem Hebeabschnitt (1), die obere Plattform (2) an ihrer Unterseite Lenkrollen (13) umfasst und die untere Plattform (3) Durchtrittsöffnungen (14) für ein Rad umfasst.

6. Der Wagenheber nach einem der vorhergehenden Ansprüche, **dadurch gekennzeichnet, dass** an jedem Hebeabschnitt (1), der Wagenheber ein Schloss umfasst, um zu verhindern, dass das untere Ende der Strebe (5) spontan gleitet.

7. Der Wagenheber nach Anspruch 6, **dadurch gekennzeichnet, dass** das Schloss eine an der unteren Plattform (3) angeordnete Reihe von Zähnen (15) und einen Anschlag (16) zum Fangen zwischen den Zähnen (15) umfasst, wobei der Anschlag (16) über eine Drehverbindung mit der Strebe (5) verbunden ist.

8. Der Wagenheber nach einem der vorhergehenden Ansprüche, **dadurch gekennzeichnet, dass** er ferner eine Rampe für ein einspuriges Fahrzeug umfasst, die entfernbar an einem Ende des Hebeabschnitts (1) befestigbar ist, wobei der Wagenheber ferner eine Halterung für ein Rad des einspurigen Fahrzeugs umfasst, die entfernbar an dem anderen Ende dieses Hebeabschnitts (1) befestigbar ist.

## Revendications

1. Un cric comprenant au moins une section de levage (1) comprenant une plateforme supérieure (2) et une plateforme inférieure (3) qui sont reliées entre elles par deux paires de bras (4), où chaque bras (4) est relié de manière rotative et non coulissante à la plateforme supérieure (2) au niveau de l'extrémité supérieure du bras (4) et relié de manière rotative et non coulissante à la plateforme inférieure (3) au niveau de l'extrémité inférieure du bras (4), où chaque section de levage (1) comprend en outre une entretoise (5) qui est reliée de manière coulissante à la plateforme inférieure (3) au niveau de l'extrémité inférieure et reliée de manière rotative à la plateforme supérieure (2) au niveau de l'extrémité supérieure, où chaque section de levage (1) comprend en outre un entraînement linéaire (6) pour faire coulisser l'extrémité inférieure de l'entretoise (5), où l'entraînement est relié à la plateforme inférieure (3) et à l'entretoise (5), où la direction de coulissement de l'extrémité inférieure de l'entretoise (5) est parallèle à l'axe longitudinal de la section de levage (1) et à la plateforme inférieure (3), où, vu depuis le côté, les deux paires de bras (4) sur chaque section de levage (1) forment un parallélogramme avec la plateforme supérieure (2) et la plateforme inférieure (3), **caractérisé en ce que** le cric comprend un total de deux desdites sections de levage (1), dont les plateformes inférieures (3) sont reliées aux deux extrémités par des traverses, où l'une des traverses comprend un arbre (17) pour transmettre un couple entre les sections de levage (1), qui est relié par une boîte de vitesses (18) aux entraînements linéaires (6) des deux sections de levage (1), où l'arbre (17) est relié à chaque extrémité de celui-ci par un engrenage à l'un des entraînements linéaires (6), où l'entraînement linéaire (6) d'au moins une section de levage (1) est pourvu d'une pièce d'extrémité destiné à être fixé à un foret.

2. Le cric selon la revendication 1, **caractérisé en ce que** l'entraînement linéaire (6) de chaque section de levage (1) comprend une tige filetée (7) reliée de manière rotative à la plateforme inférieure (3) et comprend un élément (8) avec un filetage interne complémentaire fixé à l'entretoise (5).

3. Le cric selon l'une quelconque des revendications précédentes, **caractérisé en ce que** sur chaque section de levage (1), la plateforme inférieure (3) comprend un rail (9) pour définir le coulissement de l'extrémité inférieure de l'entretoise (5), où l'entretoise (5) est pourvue d'au moins une roue (10) d'entretoise (5) montée de manière mobile sur le rail (9).

4. Le cric selon l'une quelconque des revendications précédentes, **caractérisé en ce que** sur chaque section de levage (1), la plateforme supérieure (2) et la plateforme inférieure (3) sont réalisées en tôle, où leur section transversale pour la plupart de leur longueur comprend une base (11) et deux côtés latéraux (12) fixés à la base (11) aux deux extrémités de la base (11).

5. Le cric selon l'une quelconque des revendications précédentes, **caractérisé en ce que** sur chaque section de levage (1), la plateforme supérieure (2) comprend des roulettes (13) sur son côté inférieur et la plateforme inférieure (3) comprend des ouvertures (14) pour le passage d'une roue.

6. Le cric selon l'une quelconque des revendications précédentes, **caractérisé en ce que** sur chaque section de levage (1), le cric comprend un verrou pour empêcher l'extrémité inférieure de l'entretoise (5) de coulisser spontanément.

7. Le cric selon la revendication 6, **caractérisé en ce que** le verrou comprend une rangée de dents (15) située sur la plateforme inférieure (3) et une butée (16) d'accrochage entre les dents (15), où la butée (16) est reliée à l'entretoise (5) par une liaison rotative.

8. Le cric selon l'une quelconque des revendications précédentes, **caractérisé en ce qu'**il comprend en outre une rampe pour un véhicule à voie unique pouvant être fixée de manière amovible à une extrémité de la section de levage (1), où le cric comprend en outre un support pour une roue du véhicule à voie unique pouvant être fixé de manière amovible à l'autre extrémité de cette section de levage (1).
